# EUROPÄISCHE PATENTSCHRIFT

(11) **EP 2 925 510 B1**
(45) Veröffentlichungstag und Bekanntmachung des Hinweises auf die Patenterteilung: **05.10.2022**
(21) Anmeldenummer: 13792302.5
(22) Anmeldetag: 08.11.2013
(51) Int. Cl.: B29C 73/10, B29C 73/12, B29C 73/34, B29C 35/08, B29D 99/00

(54) **VERFAHREN ZUR BEARBEITUNG EINES FASERKUNSTSTOFFVERBUNDES EINES ROTORBLATTES, HALBZEUG IN FORM EINES AUFBAUVERBUNDES UND UV-LAMPE ZUM AUSHÄRTEN EINES UV-AUSHÄRTBAREN MATRIXMATERIALS**
METHOD FOR PROCESSING A FIBER-PLASTIC COMPOSITE OF A ROTOR BLADE, SEMIFINISHED PRODUCT IN THE FORM OF A BUILT-UP COMPOSITE, AND UV LAMP FOR CURING A UV-CURABLE MATRIX MATERIAL
PROCÉDÉ D'USINAGE D'UN COMPOSITE EN PLASTIQUE RENFORCÉ DE FIBRES D'UNE PALE DE ROTOR, DEMI-PRODUIT SOUS FORME DE COMPOSITE STRUCTURAL ET LAMPE UV SERVANT À DURCIR UN MATÉRIAU DE MATRICE DURCISSANT AUX UV

(30) Priorität: 30.11.2012 DE 102012221942
(43) Veröffentlichungstag der Anmeldung: 07.10.2015
(73) Patentinhaber: Wobben Properties GmbH, 26607 Aurich (DE)
(72) Erfinder: HESSE, Ingo, 26603 Aurich (DE)
(74) Vertreter: Eisenführ Speiser
(86) Internationale Anmeldenummer: PCT/EP2013/073447
(87) Internationale Veröffentlichungsnummer: WO 2014/082841

(56) Entgegenhaltungen:
- DE-A1-102011 053 378
- GB-A- 2 475 352
- US-A- 5 166 007
- US-A1- 2002 158 209
- US-A1- 2010 258 229
- US-A1- 2012 138 223

## Beschreibung

Die Erfindung betrifft ein Verfahren zur Bearbeitung eines Faserkunststoffverbundes eines Rotorblattes nach dem Oberbegriff des Anspruchs 1.

Rotorblätter erfahren während ihres Betriebszeitraums häufig Ertrag minimierende Schäden, beispielsweise durch Erosion, Abrieb oder Blitzschlag. Um gerade kleinere Schäden schnell und kostengünstig beseitigen zu können, eignen sich insbesondere Reparaturmethoden, die vor Ort an der Windkraftanlage durchgeführt werden können. Eine Reparatur erfolgt zumeist unter Einsatz von Faserverbundmaterialien. Hierbei werden üblicherweise zweikomponentige Kleber, wie beispielsweise in der WO 2012/084949 A1 beschrieben, radikalisch härtende Harze mit Peroxid als Katalysator oder temperaturhärtende Harze als Matrixmaterialien eingesetzt.

Zweikomponentige Kleber haben den Nachteil, dass sie nach Herstellung der Mischung zügig verarbeitet werden müssen, was insbesondere für Reparaturen am montierten Rotorblatt nachteilig ist.

Temperaturhärtende Harze hingegen härten erst nach Aufbringen einer erhöhten Temperatur, können also länger verarbeitet werden; allerdings betragen die Härtezeiten bei gängigen Systemen, die für Rotorblattreparaturen eingesetzt werden ca. 6 Stunden. Während dieser Zeit muss zum einen die Härtetemperatur über entsprechende Heizer gewährleistet sein. Zum anderen führt dies zu längeren Ausfallzeiten der Windkraftanlage. Darüberhinaus kann die Temperaturhärtung Spannungen durch unterschiedliche Ausdehnungskoeffizienten in den jeweiligen Faserverbundmaterialien zur Folge haben. Temperaturhärtende Harze sind außerdem nur eingeschränkt lagerfähig bei Raumtemperatur und bedürfen teilweise einer Kühlkette, um nicht vorzeitig auszuhärten.

GB 2475 352 A offenbart ein Verfahren gemäß dem Oberbegriff des Anspruchs 1.

Wünschenswert ist es Reparaturen an Rotorblättern schnell und kostengünstig durchführen zu können, insbesondere ohne in der Verarbeitungszeit oder Lagerzeit der Komponenten eingeschränkt zu sein. An dieser Stelle setzt die Erfindung an, deren Aufgabe es ist, ein verbessertes Verfahren zur Bearbeitung eines Faserkunststoffverbundes eines Rotorblattes und eine entsprechende Vorrichtung anzugeben.

Diese Aufgabe betreffend das Verfahren wird erfindungsgemäß gelöst durch ein Verfahren mit den Merkmalen des Anspruchs 1.

Mit Hilfe des erfindungsgemäßen Verfahrens lassen sich die Reparaturzeiten für Rotorblattreparaturen und damit die Ausfallzeiten von Windkraftanlagen deutlich reduzieren. Der Einsatz von UV-aushärtbaren Matrixmaterialien erlaubt deutlich kürze Härtezeiten als beim Einsatz herkömmlicher Verfahren, außerdem lassen sich durch die längere Verarbeitungszeit vorbereitende Maßnahmen am Turmfuß statt am Rotorblatt durchführen, was zu sicherem und effizienterem Arbeiten führt. Neben der Reparatur von Rotorblättern kann das Verfahren auch zur Herstellung von Rotorblättern verwendet werden.

Nicht als erfindungsgemäß offenbart ist auch auf ein Halbzeug in Form eines Aufbauverbundes, aufweisend einen Fasermatrixverbund, umfassend ein UV-aushärtbares Matrixmaterial und ein Fasermaterial, der zwischen einer unterseitig des Fasermatrixverbundes angebrachten Trägerfolie und einem oberseitig des Fasermatrixverbundes angebrachten UV-Schutz angeordnet ist. Ein solcher Aufbauverbund, insbesondere mit doppelt gelegter Trägerfolie, ist besonders vorteilhaft geeignet, das erfindungsgemäße Verfahren auszuführen.

Nicht als erfindungsgemäß offenbart ist auch auf eine UV-Lampe, die ausgebildet ist, zum Aushärten eines UV-aushärtbaren Matrixmaterials an einem Rotorblatt umfassend eine UV-Lichtquelle in einem Gehäuse. Erfindungsgemäß ist vorgesehen, dass das Gehäuse auf einen lokalen Bearbeitungsbereich am Rotorblatt lichtdicht aufsetzbar ist.

Vorteilhafte Weiterbildungen des Verfahrens lassen sich den Unteransprüchen entnehmen, welche das Konzept der Erfindung in Bezug auf weitere Vorteile weiterbilden.

Der Fasermatrixverbund kann in einem erfindungsgemäßen Verfahren als Prepreg oder Faser-Matrix-Halbzeug bereitgestellt werden. In diesen Fällen können die Prepregs bzw. Halbzeuge in größeren Stückzahlen vorgefertigt werden; eine Einzelpräparation des Fasermatrixverbundes vor Ort kann vorteilhaft entfallen.

Es kann auch vorteilhaft sein, dass das Bereitstellen des Fasermatrixverbundes die Teilschritte Bereitstellen eines trockenen Fasermaterials und Einbringen des UV-aushärtbaren Matrixmaterials in das Fasermaterial umfasst. Beispielsweise kann so die Herstellung des Fasermatrixverbundes am Turmfuß stattfinden, während der entsprechende lokale Bearbeitungsbereich präpariert wird.

Vorteilhaft ist das Matrixmaterial ein UV-aushärtbares Harz, insbesondere ein Acrylatharz, insbesondere ein Vinylesterharz. Bevorzugt zeichnet sich Vinylesterharz im Vergleich zu den gängigen Epoxidharzen durch eine höhere Schlagfestigkeit und Dauerfestigkeit aus.

Bevorzugt werden bestimmte Fotoinitiatoren verwendet, beziehungsweise bestimmte speziell abgestimmte Kombinationen aus Harz und Fotoinitiator.

Erfindungsgemäß wird das Fasermaterial in einem Aufbauverbund auf einer Trägerfolie bereitgestellt und die Trägerfolie beim Aufbringen des Fasermatrixverbundes auf den lokalen Bearbeitungsbereich entfernt. Mit Hilfe der Trägerfolie wird die Applikation des Fasermatrixverbundes auf den Faserkunststoffverbund erleichtert. Die Trägerfolie ist hierzu doppelt gelegt, so dass sie leicht vom Fasermatrixverbund abgezogen werden kann, wenn dieser auf das Rotorblatt aufgebracht wird.

Der Fasermatrixverbund wird nach Einbringen des Matrixmaterials in das Fasermaterial mit einem UV-Schutz versehen. So kann eine unerwünschte Härtereaktionen durch natürliche UV-Strahlung vermieden werden. Der UV-Schutz sollte bevorzugt vor dem Aushärtevorgang des Matrixmaterials entfernt werden.

Bevorzugt beträgt die Aushärtezeit des Matrixmaterials mittels UV-Strahlung weniger als 30 min.

Das Verfahren wird eingesetzt, wenn das den Faserkunststoffverbund beinhaltende Rotorblatt an einer Windenergieanlage montiert ist.

Nicht erfindungsgemäß kann das den Faserkunststoffverbund beinhaltende Rotorblatt als Einzelteil vorliegen, beispielsweise bei einer Reparatur oder der Herstellung im Werk.

In einer weiteren Weiterbildung weist der Faserkunststoffverbund eine auf einer Grundschicht aufgebrachte Abfolge von harzgetränkten Laminatverbundschichten und eine oder mehrere darauf aufgebrachte Deck-Schichten, insbesondere eine äußere Schutzschicht, auf und das Präparieren umfasst Abtragen, insbesondere Ab- und/oder Anschleifen, von Deck- und Laminatschichten, vorzugsweise bis auf die Grundschicht.

Das Aushärten erfolgt mit Hilfe einer UV-Lampe, wobei eine UV-Lichtquelle in einem Gehäuse der UV-Lampe untergebracht ist, das auf den lokalen Bearbeitungsbereichs aufgesetzt, insbesondere lichtdicht aufgesetzt, wird. Dies bietet den Vorteil, dass die Aushärtung gezielt und lokal erfolgen kann.

Ein weiterer Aspekt der vorliegenden Erfindung besteht in einer UV-Lampe zum Aushärten eines UV-aushärtbaren Matrixmaterials an einem Rotorblatt umfassend eine UV-Lichtquelle in einem Gehäuse. Erfindungsgemäß ist vorgesehen, dass das Gehäuse auf einen lokalen Bearbeitungsbereich am Rotorblatt lichtdicht aufsetzbar ist.

Die UV-Lampe weist einen Formrand auf und ist mit einer Reflektorschicht ausgelegt.

Weitere vorteilhafte Weiterbildungen der UV-Lampe umfassen in einer ersten Variante, ein Gehäuse, das eine durch einen Gehäuserand umschriebene flache Aufsatzebene aufweist. In einer zweiten Variante kann ein Gehäuse eine durch einen Gehäuserand umschriebene gewölbte Aufsatzfläche aufweisen. In einer dritten Variante kann ein Gehäuse eine durch einen Gehäuserand umschriebene geknickte Aufsatzebene aufweisen. Solche oder andere Aufsatzebenen ermöglichen es, das Gehäuse passgenau und damit lichtdicht am Rotorblatt anzubringen.

Bevorzugt ist die Aufsatzebene des Gehäuses durch modular an einem Gehäusegrundteil, welcher die UV-Lichtquelle beinhaltet, anbringbare Gehäusezusatzteile realisiert, welche eine flache oder eine gewölbte oder eine geknickte Aufsatzebene aufweisen. Mit Hilfe dieser modularen Gehäusezusatzteile kann ein Gehäusegrundteil für alle Stellen am Rotorblatt genutzt werden, indem unterschiedliche Zusatzteile je nach Bearbeitungsbereich zum Einsatz kommen.

Ausführungsbeispiele der Erfindung werden nun nachfolgend anhand der Zeichnung beschrieben. Diese sollen die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Figuren und/oder den Ansprüchen offenbarten Merkmale. Die allgemeine Idee der Erfindung ist nicht beschränkt auf die exakte Form oder das Detail der gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1:: ein Ablaufdiagramm einer bevorzugten Ausführungsform eines Verfahrens zur Bearbeitung eines Faserkunststoffverbundes eines Rotorblattes;
- Fig. 2:: eine schematische Darstellung einer Ausführungsform des im Verfahren der Fig. 1 eingesetzten Fasermatrixverbundes;
- Fig. 3:: eine schematische Darstellung einer bevorzugten Ausführungsform einer UV-Lampe, gemäß Ansicht (B) eingesetzt im Verfahren der Fig. 1 am Rotorblatt einer in Ansicht (A) schematisch gezeigten Windenergieanlage.

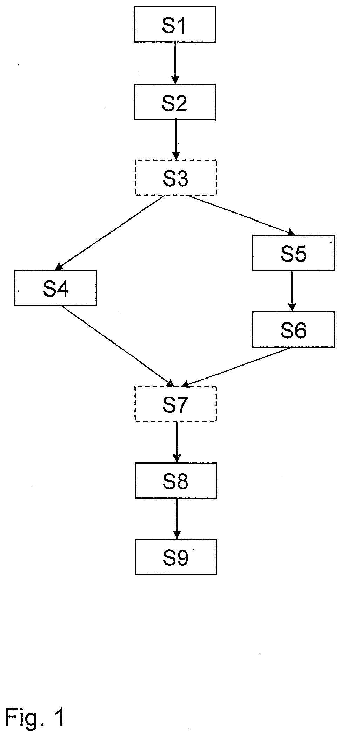

Fig. 1 zeigt ein Ablaufdiagramm des Verfahrens zur Bearbeitung eines Faserkunststoffverbundes eines Rotorblattes. In Schritt S1 wird zunächst der Faserkunststoffverbund bereitgestellt, entweder als montiertes Rotorblatt an einer Windenergieanlage oder als Einzelteil. In Schritt S2 wird dann die zu bearbeitende Stelle präpariert. Die Schritte S1 und S2 können dabei auch zeitlich parallel zu den Schritten S3 bis S7 ablaufen.

Schritt S3 umfasst den optionalen Schritt, das Fasermaterial auf einer Trägerfolie bereitzustellen, welche auch doppelt gelegt sein kann. Danach erfolgt entweder das Bereitstellen eines Fasermatrixverbundes in Form eines Prepregs oder eines Faser-Matrix-Halbzeuges (S4) oder zunächst das Bereitstellen eines trockenen Fasermaterials (S5), in welches in Schritt S6 das UV-aushärtbare Matrixmaterial eingebracht wird.

In Schritt S7 kann optional ein UV-Schutz auf dem Fasermatrixverbund angebracht werden, beispielsweise in Form einer UV-Schutzfolie. In Schritt S8 wird der Fasermatrixverbund auf den Faserkunststoffverbund aufgebracht. Liegt der Fasermatrixverbund auf einer Trägerfolie vor, so wird diese teilweise vom Fasermatrixverbund entfernt und dieser mit seiner nunmehr freiliegenden Stelle auf den lokalen Bearbeitungsbereich des Faserkunststoffverbundes appliziert. Der Fasermatrixverbund ist nun auf dem Faserkunststoffverbund fixiert. Danach kann die restliche Trägerfolie abgezogen werden und der Fasermatrixverbund schrittweise am lokalen Bearbeitungsbereich angedrückt werden. Dies ermöglicht eine gleichmäßige Applikation unter Vermeidung von Lufteinschlüssen. In Schritt S9 schließlich wird das Matrixmaterial mittels UV-Licht ausgehärtet. Vorzugsweise erfolgt dies mit Hilfe einer UV-Lampe, die lichtdicht auf den lokalen Bearbeitungsbereich aufgesetzt wird.

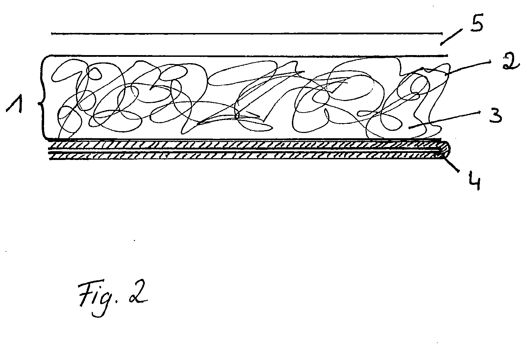

Fig. 2 zeigt eine schematische Darstellung einer bevorzugten Ausführungsform des im Verfahren eingesetzten Fasermatrixverbundes. Der Fasermatrixverbund 1 bestehend aus Fasermaterial 2 und UV-aushärtbarem Matrixmaterial 3 ist hier auf eine doppelt gelegte Trägerfolie 4 aufgebracht und wird mittels einer UV-Schutzfolie 5 gegen natürliche UV-Strahlung geschützt. Mit Hilfe der Doppellegung der Trägerfolie, wird das Abziehen der Trägerfolie beim Applizieren des Fasermatrixverbundes auf die lokale Bearbeitungsstelle des Faserkunststoffverbundes deutlich erleichtert.

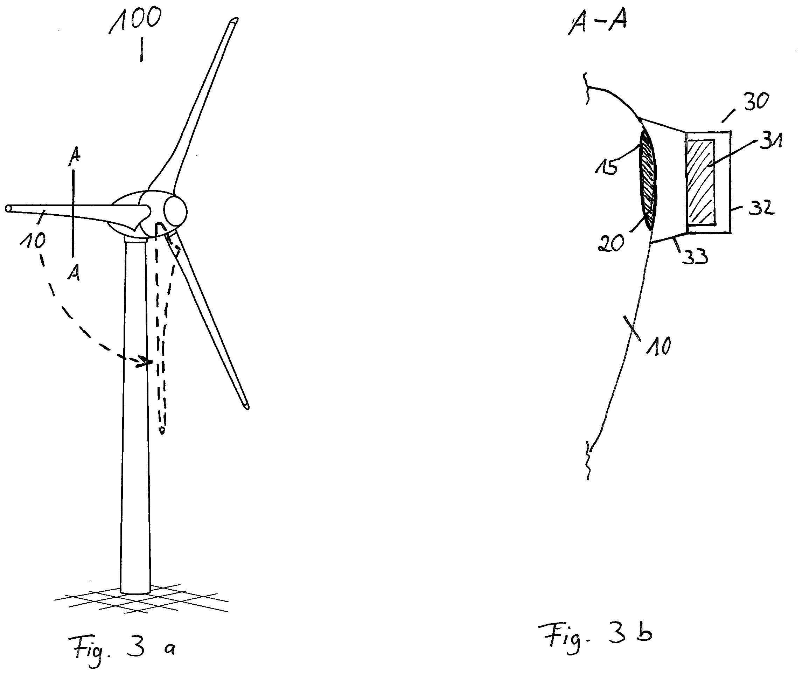

Fig. 3 ist eine schematische Darstellung einer besonders bevorzugten Ausführungsform einer UV-Lampe, die am Rotorblatt einer Windenergieanlage einsetzbar ist. Fig. 3A zeigt dabei die Windenergieanlage 100; Fig. 3B eine Schnittdarstellung eines Teils des Rotorblattes 10 mit der aufgesetzten UV-Lampe an der Stelle A-A. Zur Bearbeitung des Rotorblattes 10 wird dieses bevorzugt in eine 6 Uhr-Stellung (gestrichelt dargestellt) gebracht. Über dem lokalen Bearbeitungsbereich 15, auf dem der Fasermatrixverbund 20 bereits appliziert ist, ist die UV-Lampe 30 aufgesetzt. Die UV-Lampe 30 besteht aus einem Gehäusegrundteil 32, der die UV-Lichtquelle 31 beinhaltet, sowie einem Gehäusezusatzteil 33, der auf die Rundung des Rotorblattes an dieser Stelle angepasst ist und dadurch ein lichtdichtes Aufsetzen der UV-Lampe 30 ermöglicht. Mit Hilfe solcher Gehäusezusatzteile kann die UV-Lampe an allen Stellen am Rotorblatt eingesetzt werden.

## Patentansprüche

1. Verfahren zur Bearbeitung eines Faserkunststoffverbundes eines Rotorblattes (10), aufweisend die folgenden Schritte, wobei beim Ausführen der Schritte das den Faserkunststoffverbund beinhaltende Rotorblatt an einer Windenergieanlage (100) montiert ist
- Bereitstellen des zu bearbeitenden Faserkunststoffverbundes am Rotorblatt,
- Präparieren eines lokalen Bearbeitungsbereichs des Faserkunststoffverbundes,
- Bereitstellen eines Fasermatrixverbundes (1) umfassend ein UV-aushärtbares Matrixmaterial (3) und ein Fasermaterial (2),
- Aufbringen des Fasermatrixverbundes auf den lokalen Bearbeitungsbereich des Faserkunststoffverbundes, und
- Aushärten des Matrixmaterials mit Hilfe von UV-Strahlung,
- das Fasermaterial in einem Aufbauverbund auf einer unterseitig des Fasermatrixverbundes angebrachten Trägerfolie (4) bereitgestellt wird,
wobei
- die Trägerfolie beim Aufbringen des Fasermatrixverbundes auf den lokalen Bearbeitungsbereich entfernt wird,
- der Fasermatrixverbund nach Einbringen des Matrixmaterials in das Fasermaterial mit einem oberseitig des Fasermatrixverbundes angebrachten UV-Schutz (5) versehen wird und der UV-Schutz vor dem Aushärtevorgang des Matrixmaterials entfernt wird, und
- das Aushärten des Matrixmaterials mit Hilfe von UV-Strahlung erfolgt, wobei eine UV-Lampe (30) zum Aushärten des UV-aushärtbaren Matrixmaterials an dem Rotorblatt, umfassend eine UV-Lichtquelle (31) in einem Gehäuse (32, 33), verwendet wird,
**dadurch gekennzeichnet, dass**
- die Trägerfolie doppelt gelegt ist, und
- beim Entfernen teilweise vom Fasermatrixverbund entfernt wird und der Fasermatrixverbund mit seiner nunmehr freiliegenden Stelle auf den lokalen Bearbeitungsbereich des Faserkunststoffverbundes appliziert und fixiert wird, und danach die restliche Trägerfolie abgezogen wird und der Fasermatrixverbund schrittweise am lokalen Bearbeitungsbereich angedrückt wird, sowie dass
- das Gehäuse auf den lokalen Bearbeitungsbereich am Rotorblatt lichtdicht aufgesetzt wird, wobei das Gehäuse einen Formrand aufweist und mit einer Reflektorschicht ausgelegt ist.

2. Verfahren nach Anspruch 1 **dadurch gekennzeichnet, dass**
- der Fasermatrixverbund als Prepreg, Faser-Matrix-Halbzeug bereitgestellt wird.

3. Verfahren nach Anspruch 1, **dadurch gekennzeichnet, dass** das Bereitstellen des Fasermatrixverbundes die Teilschritte Bereitstellen eines trockenen Fasermaterials und Einbringen des UV-aushärtbaren Matrixmaterials in das Fasermaterial, umfasst.

4. Verfahren nach Anspruch 1 oder 2 **dadurch gekennzeichnet, dass** das Matrixmaterial ein UV-aushärtbares Acrylatharz oder ein Vinylesterharz ist.

5. Verfahren nach einem der Ansprüche 1 bis 4 **dadurch gekennzeichnet, dass** die Aushärtezeit des Matrixmaterials mittels UV-Strahlung unterhalb von 30 min liegt.

6. Verfahren nach einem der Ansprüche 1 bis 5 **dadurch gekennzeichnet, dass**
- der Faserkunststoffverbund eine auf einer Grundschicht aufgebrachte Abfolge von harzgetränkten Laminatverbundschichten und eine oder mehrere darauf aufgebrachte Deck-Schichten umfassend eine äußere Schutzschicht aufweist, und
- der Schritt des Präparierens Abtragen umfassend Ab- und/oder Anschleifen von Deck- und Laminatschichten, bis auf die Grundschicht umfasst.

## Claims

1. Process for treatment of a fibre-plastic composite of a rotor blade (10), comprising the following steps, wherein when performing the steps the rotor blade comprising the fibre-plastic composite is fitted to a wind power plant (100),
- providing the fibre-plastic composite to be treated on the rotor blade,
- preparing a local treatment region of the fibre-plastic composite,
- providing a fibre-matrix composite (1) comprising a UV-curable matrix material (3) and a fibre material (2),
- applying the fibre-matrix composite to the local treatment region of the fibre-plastic composite and
- curing the matrix material by means of UV radiation, wherein
- the fibre material is provided in a layup composite on a carrier film (4) attached to the bottom surface of the fibre-matrix composite, wherein
- during application of the fibre-matrix composite onto the local treatment region the carrier film is removed,
- after introduction of the matrix material into the fibre material the fibre-matrix composite is provided with a UV protection (5) applied to the top surface of the fibre-matrix composite and the UV protection is removed before the curing operation of the matrix material and
- the curing of the matrix material is effected by means of UV radiation, wherein a UV lamp (30) comprising a UV light source (31) in a housing (32, 33) is used for curing the UV-curable matrix material on the rotor blade, **characterized in that**
- the carrier film is applied in a double layer and
- during removal is partially removed from the fibre-matrix composite and the fibre-matrix composite with its newly exposed side is applied and fixed onto the local treatment region of the fibre-plastic composite and subsequently the remaining carrier film is peeled off and the fibre-matrix composite is gradually pressed onto the local treatment region and **in that**
- the housing is placed onto the local treatment region on the rotor blade in a lightfast manner, wherein the housing comprises a formfitting edge and is provided with a reflector layer.

2. Process according to Claim 1, **characterized in that**
- the fibre-matrix composite is provided as a prepreg, fibre-matrix semifinished product.

3. Process according to Claim 1, **characterized in that** the providing of the fibre-matrix composite comprises the substeps of providing a dry fibre material and introducing the UV-curable matrix material into the fibre material.

4. Process according to Claim 1 or 2, **characterized in that** the matrix material is a UV-curable acrylate resin or a vinyl ester resin.

5. Process according to any of Claims 1 to 4, **characterized in that** the curing time of the matrix material by means of UV radiation is below 30 min.

6. Process according to any of Claims 1 to 5, **characterized in that**
- the fibre-plastic composite comprises a sequence of resin-impregnated laminate composite layers applied to a base layer and one or more covering layers comprising an outer protective layer applied thereto and
- the step of preparing comprises a materialsubtractive operation comprising grinding off and/or grinding back covering layers and laminate layers down to the base layer.

## Revendications

1. Procédé d'usinage d'un composite en matière plastique renforcé par des fibres d'une pale de rotor (10), présentant les étapes suivantes, dans lequel la pale de rotor contenant le composite en matière plastique renforcé par des fibres est montée sur une éolienne (100) lors de l'exécution des étapes :
- la fourniture du composite en matière plastique renforcé par des fibres à usiner sur la pale de rotor,
- la préparation d'une zone d'usinage locale du composite en matière plastique renforcé par des fibres,
- la fourniture d'un composite de matrice renforcé par des fibres (1) comprenant un matériau de matrice durcissable sous l'action d'UV (3) et un matériau à base de fibres (2),
- l'application du composite de matrice renforcé par des fibres sur la zone d'usinage locale du composite en matière plastique renforcé par des fibres, et
- le durcissement du matériau de matrice à l'aide d'un rayonnement UV,
- le matériau à base de fibres étant fourni dans un composite structural sur un film de support (4) installé sur le côté inférieur du composite de matrice renforcé par des fibres,
dans lequel
- le film de support est enlevé lors de l'application du composite de matrice renforcé par des fibres sur la zone d'usinage locale,
- le composite de matrice renforcé par des fibres est pourvu, après introduction du matériau de matrice dans le matériau à base de fibres, d'une protection UV (5) montée sur le côté supérieur du composite de matrice renforcé par des fibres, et
la protection UV est enlevée avant le processus de durcissement du matériau de matrice, et
- le durcissement du matériau de matrice est effectué à l'aide d'un rayonnement UV, dans lequel une lampe UV (30) est utilisée pour durcir le matériau de matrice durcissable sous l'action d'UV sur la pale de rotor, comprenant une source de lumière UV (31) dans un boîtier (32, 33),
**caractérisé en ce que**
- le film de support placé est doublé, et
- est enlevé lors de l'enlèvement partiel du composite de matrice renforcé par des fibres et le composite de matrice renforcé par des fibres est appliqué et bloqué, par son emplacement désormais à découvert, sur la zone d'usinage locale du composite en matière plastique renforcé par des fibres, puis le film de support restant est retiré et le composite de matrice renforcé par des fibres est pressé progressivement sur la zone d'usinage locale, ainsi que
- le boîtier est placé de manière étanche à la lumière sur la pale de rotor sur la zone d'usinage locale, dans lequel le boîtier présente un bord moulé et est conçu avec une couche réfléchissante.

2. Procédé selon la revendication 1, **caractérisé en ce que**
- le composite de matrice renforcé par des fibres est fourni en tant que pré-imprégné, en tant que demiproduit de matrice renforcé par des fibres.

3. Procédé selon la revendication 1, **caractérisé en ce que** la fourniture du composite de matrice renforcé par des fibres comprend les étapes partielles de la fourniture d'un matériau sec à base de fibres et de l'introduction du matériau de matrice durcissable sous l'action d'UV dans le matériau à base de fibres.

4. Procédé selon la revendication 1 ou 2, **caractérisé en ce que** le matériau de matrice est une résine d'acrylate durcissable sous l'action d'UV ou une résine d'ester vinylique.

5. Procédé selon l'une quelconque des revendications 1 à 4, **caractérisé en ce que** la durée de durcissement du matériau de matrice au moyen d'un rayonnement UV est inférieure à 30 min.

6. Procédé selon l'une quelconque des revendications 1 à 5, **caractérisé en ce que**
- le composite en matière plastique renforcé par des fibres présente une succession, appliquée sur la couche de base, de couches de composite stratifiées imprégnées de résine et une ou plusieurs couches couvrantes appliquées dessus, comprenant une couche de protection extérieure, et
- l'étape de préparation comprend l'enlèvement comprenant l'élimination par ponçage et/ou le meulage de couches couvrantes et stratifiées à l'exception de la couche de base.
